# EUROPEAN PATENT SPECIFICATION

(11) **EP 2 310 255 B1**
(45) Date of publication and mention of the grant of the patent: **03.04.2013**
(21) Application number: 09800006.0
(22) Date of filing: 07.07.2009
(51) Int. Cl.: B62M 3/00

(54) **CRANK SET FOR A BICYCLE**
KURBELGARNITUR FÜR EIN FAHRRAD
PEDALIER POUR VELO

(30) Priority: 21.07.2008 NL 2001840; 16.04.2009 NL 2002757
(43) Date of publication of application: 20.04.2011
(73) Proprietor: 3T Design Limited, Central Hong Kong (CN)
(72) Inventor: McAINSH, Richard, I-24030 Villa D'adda BG (IT)
(74) Representative: Riemens, Roelof Harm
(86) International application number: PCT/EP2009/004967
(87) International publication number: WO 2010/009813

(56) References cited:
- EP-A- 1 612 135
- WO-A-02/47964
- FR-A- 2 893 303
- US-A1- 2001 049 976

## Description

The invention relates to a crank set for a bicycle, in particular of the type having a one part crankshaft with two outer ends each having a pedal crank mounted thereto, or of the type having a two-part crankshaft, the two parts of which are fixedly connected with one another when mounted in a bottom bracket shell of a bicycle frame.

Bicycles have been used as a means of transportation and recreation for hundreds of years. During the entire existence of the bicycle, in order to increase performance, continual efforts have been underway to reduce the weight of the bike without reducing the strength and stiffness. For an optimum performance, a bicycle needs adequate stiffness so that pedalling energy is used for propelling the bicycle forward, rather than being absorbed in flexing of structural bicycle components.

There are a number of ways to attach the pedal cranks to a crankshaft which in turn is held rotatable in a bottom bracket shell of a bicycle frame. Older systems used wedge shaped pins for the attachment of the pedal cranks to the crankshaft. In newer systems pedal cranks are pushed with a form fit, for example a square tapered recess, onto a complementary shaped crankshaft, and are held in this position by bolts or nuts screwed onto the outer end of the crankshaft. Such mechanical attachments of the pedal cranks sometimes need to be reinforced with gussets. The mechanical attachment constructions and reinforcing gussets result in a build-up of weight at the attachment locations.

Recent designs have the drive side pedal crank, that is to say the pedal crank on the side where one or more chain rings are provided, mostly the right side pedal crank, permanently attached to the crankshaft. See for example EP-1 792 818 which discloses such an integrated drive side pedal crank. The crankshaft here is made out of two parts each provided with a Hirth toothing. In the assembled state the two shaft parts are fixedly connected with each other by means of a longitudinal bolt extending through the center of the two shaft parts. With this the teeth of the two shaft parts grip into each other in such a way that the two shaft parts are not able to rotate relative to one another. The drive side pedal crank is formed integral with the drive side crankshaft part. The non-drive side pedal crank is mounted onto its corresponding non-drive side shaft part by means of a threaded coupling.

US 2001/0049976 discloses an embodiment with a two-part crankshaft having both pedal cranks formed as one piece with the respective shaft parts. The two shaft parts at their free ends are provided with a complementary toothing, which in the assembled state grip into each other.

A disadvantage with these known two-part crankshaft constructions with integral pedal cranks(s) is that they are inflexible in use. It is not possible for the user to quickly change the integrated pedal cranks, because then it would be necessary to fully disassemble the entire crank set including removing the two crankshaft parts from the bottom bracket shell of the bicycle. Thus in case of for example damage to one of the pedal cranks a lot of time and effort is needed to repair it. Also it is more difficult and time-consuming to equip a bicycle with a specific crank set, for example when another length, weight, material and/or design of the pedal cranks are wanted. Since most common modern crank sets have an integrated spider on the drive-side pedal crank, the permanent fixation of the drive side pedal crank with the crankshaft limits the possibility to easily replace one or more of the chain rings to be mounted therewith. In particular the smaller chain rings having an inner diameter smaller than the outer dimensions of the spider can only be mounted and replaced in a fully disassembled state of the two-part crankshaft.

The present invention aims to at least partly overcome the abovementioned disadvantages, or to provide a usable alternative. In particular, the invention aims to provide a lightweight crank set construction which is strong and stiff while offering flexibility to the user.

This aim is achieved by a crank set according to claim 1. The crank set comprises a crankshaft, bearings, a chain ring and two pedal cranks. The drive side crankshaft end is provided with an integrally formed radially outwardly extending mounting body upon which the drive side pedal crank and the chain ring are mounted. Upon the non-drive side crankshaft end a non-drive side pedal crank is mounted. The drive side pedal crank and chain ring are connected to their mounting body by means of releasable connection elements, for example bolts. These connection elements advantageously may lie near the outer end of the mounting body and thus at a diameter which may be substantially larger than the diameter of the crankshaft itself. This makes the maximum torque/load to be transferred via these connection elements smaller, and thus to construct the several parts of the crank set construction more light-weight and/or make the entire construction stronger and stiffer at the same time, while keeping it flexible during use. A quick and easy removal of the drive side pedal crank is now possible, which at the same time allows for an easy (re-) placement of the chain ring(s). Pedal cranks with different properties (dimensions, shapes, time trial, power measurement, super-lightweight) and/or different materials (carbon, aluminium) can easily be mounted at any desired place and moment in time up to the choice of the user. Furthermore, one has the freedom to choose a material for the crankshaft which might well be different from the one for the pedal cranks.

In the light of the present invention, integrally formed means that the crankshaft and mounting body are joined with each other in a permanent manner, such as welding, bonding or the like, or that each shaft part with its respective mounting body is formed as a single piece. In particular composite materials like carbon fibres can advantageously and economically be used for integrally forming the crankshaft parts with their mounting bodies with a lightweight yet strong and stiff construction. Depending on the intended use, performance, quality, price, etc. other materials may also be used.

In a further embodiment the drive side pedal crank comprises a plurality of mounting positions which are complementary to mounting positions on the mounting body. These mounting positions are circumferentially divided around the crankshaft at a radial distance from the crankshaft, in particular a radial distance of at least 10 centimetres. For example the mounting positions are formed by holes through which bolts extend as releasable connection organs. These bolts may be fixed with nuts, or some of the holes may be threaded such that the bolts can be screwed there into.

In an even further embodiment the chain ring is also provided with a complementary set of mounting positions such that the releasable connection organs like the mentioned bolts may interact therewith. In this way only one set of releasable connection organs is sufficient to mount both the drive side pedal crank and the chain ring onto the mounting body which is integrally formed with the crankshaft.

The non-drive side pedal crank may be directly mounted to the non-drive side crankshaft end, for example by means of a conventional spline and bolt fixing. Preferably however the crank set comprises a separate locking ring which is provided for locking with the non-drive side pedal crank. The locking ring in turn is then connected to the non-drive side crankshaft end. This locking ring makes it possible to first place the crankshaft with its integral mounting body in the bottom bracket of a bicycle and then connecting the locking ring thereto. With this the locking ring preferably is constructed such that its connecting with the non-drive side crankshaft end, for example by means of a small bolt, automatically locates the bearings with a certain preload in the bottom bracket of the bicycle and thus keeps the crankshaft properly aligned. Furthermore the assembly is then also automatically sealed off from dirt independently whether or not the pedal cranks are mounted thereto or not.

In an embodiment the locking ring is formed by a double-acting splined locking ring which on the one hand has a splined connection with the crankshaft and on the other hand with the non-drive side pedal crank. The splined connection between the pedal crank and locking ring may then also be axially fixed by means of an axial bolt.

In a variant embodiment the crank shaft is made two-part with a drive side shaft part and a non-drive side shaft part, wherein connection means are provided for fixedly connecting the two shaft parts with each other, and wherein the drive side shaft part is provided with the above mentioned integrally formed (drive side) mounting body and wherein the non-drive-side shaft part is provided with a second integrally formed radially outwardly extending (non-drive side) mounting body upon which the non-drive side pedal crank is mounted. Thus for the non-drive side pedal crank the same advantage goes that it may now be connected to its mounting body by means of releasable connection elements, for example bolts, which connection elements advantageously may lie near the outer end of the mounting body and thus at a diameter which may be substantially larger than the diameter of the crankshaft itself.

The crankshaft parts may be constructed massif or hollow and/or may be constructed with complementary profiled end parts gripping into each other when abutting in an assembled position. In a preferred embodiment at least one of the shaft parts, in particular the drive side shaft part, is constructed hollow and has inner dimensions larger than the outer dimensions of the other shaft part. In this way the two shaft parts may be slid telescoping into each other during mounting. The smaller shaft part sleeves inside the bigger one. Preferably the inner diameter of the larger shaft part is only slightly larger than the outer diameter of the smaller shaft part. In this way a solid and strong play-free assembly of the two shaft parts is achieved when slid into one another.

The outer shaft part may be constructed wit an outer diameter close to the maximum achievable diameter inside the bottom bracket shell, in particular at least 30mm. The larger diameter means that the shaft parts can be made with a lightweight yet strong and stiff construction. The larger diameter of the shaft parts including a possibly larger (oversized) bottom bracket shell of the frame provides more area to attach a larger down frame tube, seat frame tube and chain stays, in order to better resist deflection from pedalling forces.

In a further embodiment, the outer shaft part has a length equal to or larger than the width of the bottom bracket shell of the bicycle frame. In this way the bearings for holding the outer shaft part rotatable in the mounting bracket can be mounted at both end parts of the outer shaft part.

Preferably, the outer shaft part has a length substantially equal to the length of the inner shaft part. This way the inner shaft part can be fully inserted in the outer shaft part during mounting. In this fully inserted position the outer shaft part lies with its free end in a position close to the mounting body of the inner shaft part, whereas the free end of the inner shaft part lies with its free end in a position close to the mounting body of the outer shaft part. Thus the two shaft parts are able to support one another over their full length, making it possible to construct each of with thinner walls and thus more lightweight and/or out of a more sophisticated composite material.

The outer dimensions of connection points provided on the radially outwardly extending mounting body of the drive side shaft end/part preferably is at least 25 mm. The diameter of this outwardly extending mounting body is governed by the size of the chain wheel it is desirable to fit thereon. In the bicycle industry most suppliers of these chain wheels have their own "standards" for the pitch circle diameter of the connection points. Advantageously, the integrally formed mounting body on this drive side shaft part can be formed by a multi-armed piece having several arms extending in distinctive radial directions. In a variant the mounting body is formed by a somewhat circular mounting flange with or without left out open sections. For example a plurality of through openings may be provided near the outer edge of the mounting body/flange as connection points for connection means, like bolts or the like, to pass through for connecting to the chain ring and/or drive side pedal crank.

The outer dimensions of connection points provided on the radially outwardly extending mounting body of the non-drive side shaft part preferably also is at least 25 mm. Advantageously, the integrally formed mounting body on this non-drive side shaft part can be formed by a multi-armed piece having several arms extending in distinctive radial directions. For example a plurality of through openings may be provided near the outer edge of the mounting body/multi-armed piece as connection points for connection means, like bolts or the like, to pass through for connecting to the non-drive side pedal crank.

Further preferred embodiments are stated in the subclaims.

The invention also relates to a bicycle provided with the above stated crank set.

Below the invention shall be further clarified with reference to the accompanying drawings, in which:
Figure 1 is an exploded view in perspective of an embodiment of a crank set according to the invention with integral mounting bodies on both sides of the crankshaft;
Figure 2 is a rear view of figure 1;
Figure 3 is a perspective view of the crank set of figure 1 in the assembled state seen from the drive side with a different type of spider;
Figure 4 is a view conform figure 3 seen from another angle;
Figure 5 is a partially cut open view of figure 4 with the mounting flange sandwiched between the two chain wheels;
Figure 6 is a partial view showing the connection between a plug and the two shaft parts without the chain wheels and pedal cranks; and
Figure 7 is a view according to figure 1 of a variant embodiment of the crank set according to the invention with an integral mounting body on only the drive side of the crankshaft.

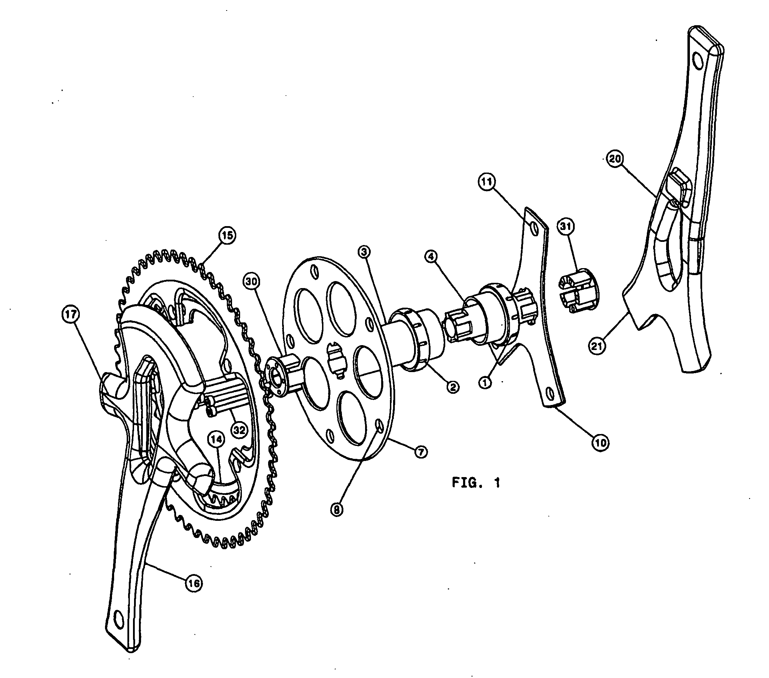

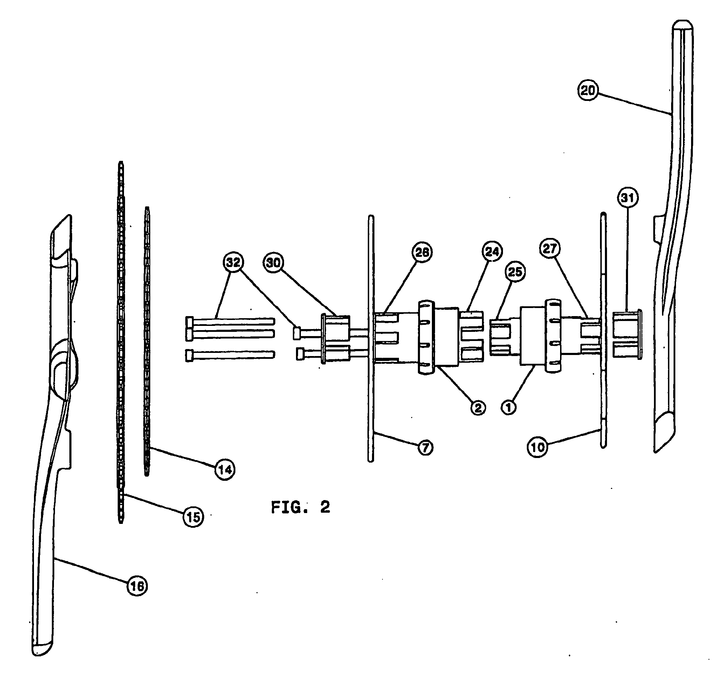

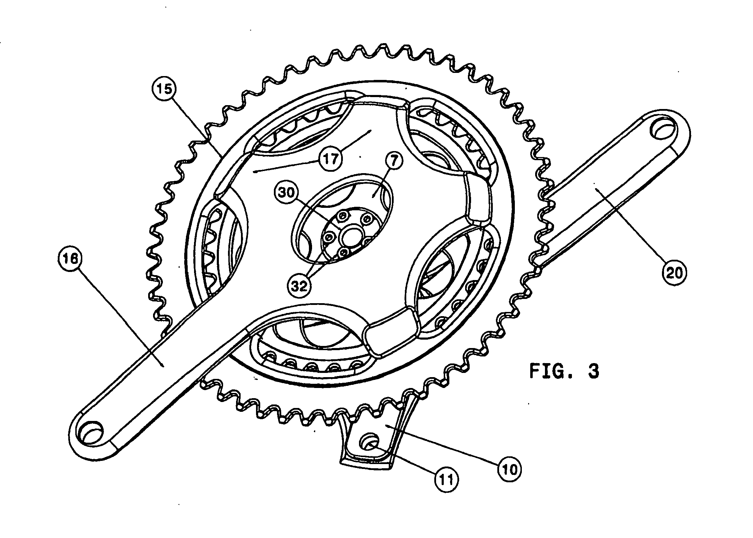

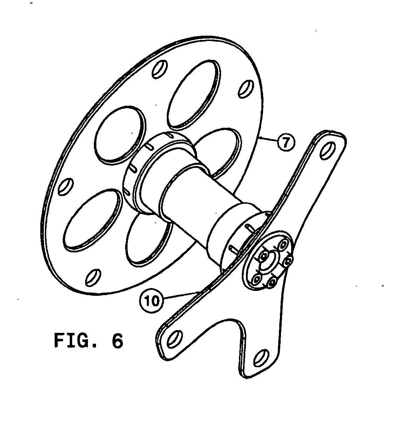

In figures 1-6 the crank set comprises a left bearing cup 1 and a right bearing cup 2. These bearing cups 1, 2 can be screwed or pressed into a bottom bracket shell of a frame of a bicycle (not shown) and together allow the crank set 1 to rotate freely. The bottom bracket shell in turn connects to the seat tube, down tube and chain stays as part of the bicycle frame. Inside the bearing cups 1, 2 a two-part crankshaft is mounted. The two-part crankshaft comprises an outer drive side shaft part 3 and an inner non-drive side shaft part 4. Both shaft parts 3, 4 are hollow and substantially have the same length. They slide into each other with a close fit. The two bearing cups 1, 2 act on the outer drive side shaft part 3.

The drive side shaft part 3 is provided with an integrally formed circular mounting flange 7 as mounting body. This mounting flange 7 is provided with several cut-outs in order to save as much weight as possible, and is provided with several connection holes 8 near its outer circumference. The non-drive side shaft part 4 is provided with an integrally formed multi-armed piece 10 as mounting body which has three arms extending in distinctive radial directions. Each of the arms is provided with a connection hole 11 near its outer end.

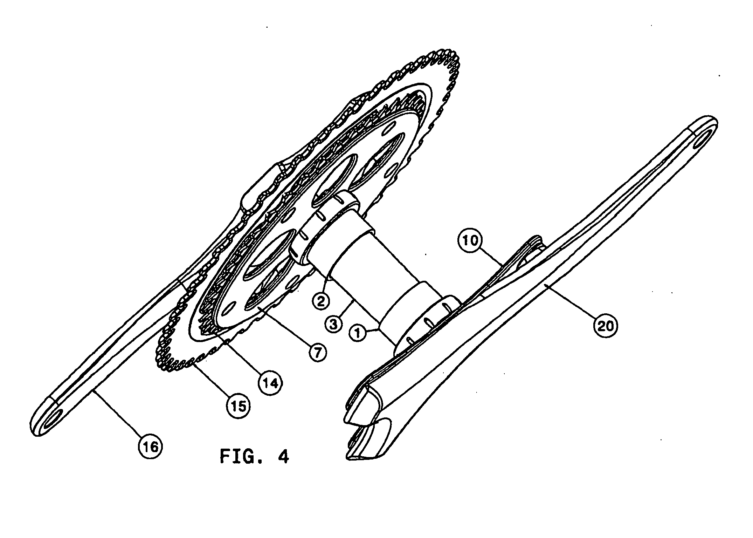

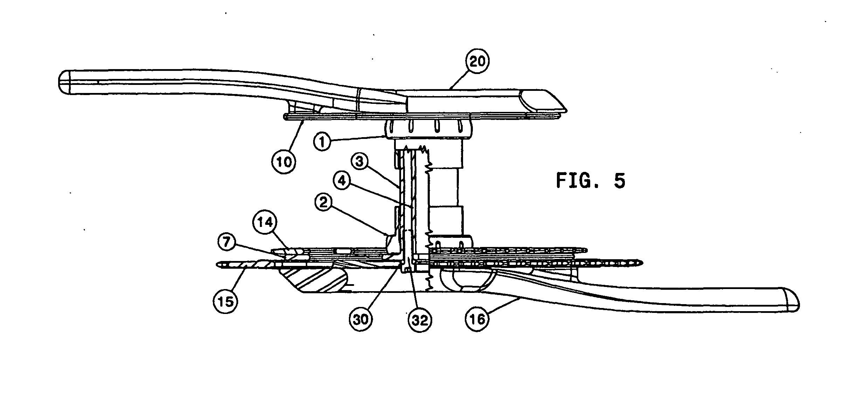

The mounting flange 7 is connected by a plurality of bolts extending through the connection holes 8 with an inner chain ring 14, an outer chain ring 15, and a drive side pedal crank 16 with integrated spider 17. With this the chain rings 14, 15 are sandwiched between the mounting flange 7 and the spider 17 of the pedal crank 16 (figure 4), or the chain rings 14, 15 may be provided on opposite sites of the mounting flange 7 (figure 5). The multi-armed piece 10 is connected by a plurality of bolts extending through the connection holes 11 with a non-drive side pedal crank 20 equipped with a complementary multi-arm construction 21.

Each of the two shaft parts 3, 4 is provided at its free end part with a profile 24, 25 consisting of several longitudinal slits distributed around the circumference. Furthermore, each of the two shaft parts 3, 4 at its end part near its integrally formed mounting body again is provided with a profile 26, 27 also consisting of several longitudinal slits distributed around the circumference. When mounted inside one another, the profiles 24, 27 and 25, 26 lie in line with each other and aluminium plugs 30, 31 with complementary profiles, can be pushed substantially free of play with longitudinal interspaced ribs into the slits of both shaft parts 3, 4. Thus the two shaft parts 3, 4 are locked against rotation with respect to one another, with which the plugs 30, 31 can take up any occurring torsion during pedalling. By subsequently connecting the plugs 30, 31 with one another by means of longitudinal bolts 32 and nuts 33, the two shaft parts 3, 4 are also locked in the longitudinal direction with respect to one another. The plugs 30, 31 can advantageously be symmetrical so that they are interchangeable side to side.

In the assembled state the drive-side shaft part 3 has the two bearing cups 1, 2 covering its profiled end parts 24-27. This has the advantage to dirt can not enter the crankshaft from there. Furthermore, this arrangement allows that the crankshaft can have a maximum achievable diameter for a specific type of bottom bracket, preferably at least 30mm for use in an oversized frame. As can be seen in figure 4, in the assembled state the drive-side shaft part 3 furthermore has the two bearing cups 1, 2 substantially lying against the mounting bodies 7, 10 respectively. This advantageously makes it possible to keep the width of the entire crank set minimized.

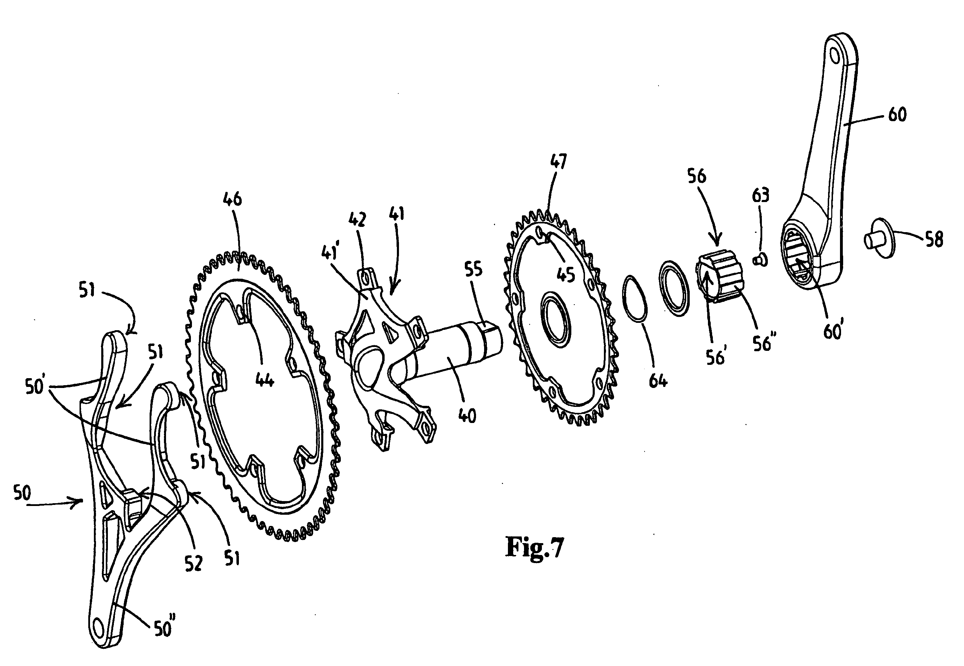

In figure 7 a variant is shown in which the crank set comprises a crankshaft 40 upon the outer side of which (not shown) bearings can act. The drive side shaft end, in the drawing the left end, is provided with an integrally formed multi-armed mounting body 41. Preferably the mounting body 41 has been manufactured in one step with the crankshaft 40 out of the same material, for example a carbon composite material. This provides for a strong integral connection between the mounting body 41 and the crankshaft 40. The mounting body 41 has five arms 41' extending in different radial directions. The arms 41' are circumferentially divided around the crankshaft 40. Each arm 41' at its outer end is provided with a mounting hole 42. The mounting holes 42 each lie at a radial distance from a central axis of the crank shaft 40 which radial distance is at least twice, and in particular four times the radius of the crankshaft 40 itself. More in particular this radial distance of the mounting holes is at least 8 centimetres to at most 15 cm, whereas the radius of the crankshaft itself is at least 2 centimetres and at most 6 centimetres.

The mounting holes 42 correspond with mounting holes 44 and 45 provided in chain rings 46 and 47. Furthermore the crank set comprises a drive side pedal crank 50 which here is constructed with two mounting arms 50' which merge into a radial pedal crank part 50". Each mounting arm 50' is provided with two threaded openings 51. The pedal crank part 50" is also provided with a threaded opening 52. The threaded openings 51, 52 correspond to the mounting holes 42, 44 and 45. Thus the inner chain ring 47, the outer chain ring 46, and the drive side pedal crank 50 can easily be mounted onto the mounting body 41 by means of bolts. The using of bolts makes it possible to easily replace one or more of the chain rings 46, 47 and drive side pedal crank 50 whenever this is necessary or desired. The complementary mounting holes and openings 42, 44, 45, 51 and 52 lie at a relative large radius, that is to say a radius which is substantially larger than the radius of the crankshaft 40 itself. The releasable connection organs, in this case the bolts, also come to lie at this relative large radius. This has the advantageous effect that these connections have a relative low load to bear during cycling compared to state of the art connections where the mounting body is not integral with crankshaft and/or where the pedal crank is directly mounted with a form fit or peg onto the crankshaft itself. This makes it possible to save save weight and make the crank set construction light weight.

The non-drive side shaft end, in the drawing the right end, of the crankshaft 40 is provided with a spline 55 upon which a locking ring 56 with a complementary spline 56' can be placed with a form fit such that they can not rotate relative to each other. The locking ring 56 at its outer side is provided with a plurality of splines 56" which in turn are complementary to a splined opening 60' of a non-drive side pedal crank 60. The non-drive side pedal crank 60 can thus be placed with a form fit onto the locking ring 56 such that they can not rotate relative to each other. The non-drive side pedal crank 60 in the assembled state can be axially fixed to the crankshaft 40 by means of a screw 58 which can be screwed into a complementary threaded opening in the non-drive side end of the crankshaft 40.

During assembly first the crankshaft 40 together with a set of suitable bearings is slid into the bottom bracket shell of the bicycle. Since the mounting body 41 is integral with the crankshaft this needs to be done from the drive side. After that, the splined locking ring 56 is placed over the spline 50 of the crankshaft 40 and axially fixed thereto by means of a screw 63 which can screwed into a complementary threaded opening in the non-drive side end of the crankshaft 40. This axial fixing of the locking ring 56 at the same time locates the bearings. A suitable preload on the bearings is achieved by means of placing a wavy washer 64 between the locking ring 56 and the non-drive side end bearing. From that moment on the crankshaft 40 can remain in its position, while at the same time the bearings can remain sealed from dirt during the rest of the assembling. The subsequent mounting of the drive side pedal crank 50 and chain rings 46, 47 onto the mounting body 41 as well as the subsequent mounting of the non-drive side pedal crank 60 onto the locking ring 56 is fully independent thereof.

Besides the embodiment shown numerous variants are possible. For example the various components may have various shapes and dimensions and be made out of other suitable materials. For the one-part shaft embodiment with integral mounting body at its drive side end, also other types of connections between the non-drive side pedal crank and the crankshaft can be used, for example a direct form fit without intermediate locking ring. For the two-part shaft embodiment, instead of profiled plugs and longitudinal bolts any other suitable type of connection means can be used. It is noted that the construction of the two-part crankshaft with inner and outer shaft parts sliding into each other can also be advantageously used in crankshaft constructions without the integrally formed mounting bodies according to the invention, for example in combination with one or two pedal cranks integrally formed with the respective crankshaft parts. The invention can be used for all kinds of bicycles, in particular racing bicycles.

Thus the invention provides a lightweight multi-functional crank set construction which is very flexible during use and which does not require special tools to separate the pedal cranks from the respective shaft parts. If necessary, it is also still possible to assemble or disassemble the entire crank set rapidly. The connection between the two pedal cranks and the crankshaft may be light and efficient, whereas the entire stiffness of the drive train assembly may be increased with respect to conventional crank designs.

## Claims

1. Crank set for a bicycle, comprising:
- a crankshaft (40) having a drive side shaft end and a non-drive side shaft end;
- bearings (1, 2) for mounting the crankshaft (40) rotatable in a bottom bracket shell of a frame of the bicycle;
- a drive side pedal crank (16; 50);
- a non-drive side pedal crank (20, 60); and
- at least one chain ring (14, 15; 46, 47);
**characterized in that**,
the drive-side shaft end is provided with an integrally formed radially outwardly extending mounting body (7; 41) upon which mounting body both the drive side pedal crank (16; 50) and the chain ring (14, 15; 46, 47) are mounted by means of releasable connection organs.

2. Crank set according to claim 1, wherein the crankshaft (40) including its integrally formed mounting body (7; 41) is made out of a lightweight material, in particular a carbon composite material.

3. Crank set according to one of the preceding claims, wherein the drive side pedal crank (16; 50) comprises a plurality of mounting positions for the releasable connection organs to interact with, which plurality of mounting positions are complementary to mounting positions on the mounting body (50; 48) and which plurality of mounting positions are circumferentially divided around the crankshaft (40) at a radial distance from the crankshaft.

4. Crank set according to claim 3, wherein the plurality of mounting positions further are complementary to mounting positions on the chain ring (14,15 ; 46, 47).

5. Crank set according to claim 3 or 4, wherein the drive side pedal crank (16; 50) comprises five mounting positions.

6. Crank set according to one of the preceding claims, wherein the releasable connection organs lie at a radial distance from the central axis of the crankshaft of at least 8 centimetres.

7. Crank set according to one of the preceding claims, wherein the releasable connection organs are bolts.

8. Crank set according to one of the preceding claims, wherein a double-acting spline locking ring is provided at the non-drive side shaft end for interlocking the non-drive side shaft end with the non-drive side pedal crank.

9. Crank set according to one of the preceding claims, wherein the integrally formed mounting body is formed by a mounting flange.

10. Crank set according to one of the preceding claims, wherein the integrally formed mounting body is formed by a multi-armed piece extending in distinctive radial directions.

11. Bicycle provided with a crank set according to one of the preceding claims.

## Patentansprüche

1. Kurbelgarnitur für ein Fahrrad, mit:
- einer Kurbelwelle (40) mit einem antriebseitigen Wellenende und einem antriebabseitigen Wellenende;
- Lagern (1, 2) zum drehbaren Anbringen der Kurbelwelle (40) in einem Tretlagergehäuse eines Rahmens des Fahrrades;
- einer antriebseitigen Tretkurbel (16; 50);
- einer antriebabseitigen Tretkurbel (20, 60); und
- wenigstens einem Kettenblatt (14, 15; 46, 47),
**dadurch gekennzeichnet, dass**
das antriebseitige Wellenende mit einem einstückig ausgebildeten, sich radial nach außen erstreckenden Montagekörper (7; 41) versehen ist, auf welchem sowohl die antriebseitige Tretkurbel (16; 50) als auch das Kettenblatt (14, 15; 46, 47) mithilfe lösbarer Verbindungsglieder montiert sind.

2. Kurbelgarnitur nach Anspruch 1, in welcher die Kurbelwelle (40) mit ihrem einstückig ausgebildeten Montagekörper (7; 41) aus einem leicht gewichtigen Material hergestellt ist, insbesondere aus einem Karbonverbundmaterial.

3. Kurbelgarnitur nach einem der vorhergehenden Ansprüche, in welcher die antriebseitige Tretkurbel (16; 50) eine Mehrzahl von Montagepositionen für die lösbaren Verbindungsglieder umfasst, um mit diesen zu interagieren, wobei die Mehrzahl von Montagepositionen komplementär zu Montagepositionen auf dem Montagekörper (7, 41) ist und wobei die Mehrzahl von Montagepositionen umfänglich um die Kurbelwelle (40) herum, in radialem Abstand von der Kurbelwelle verteilt ist.

4. Kurbelgarnitur nach Anspruch 3, in welcher die Mehrzahl von Montagepositionen ferner komplementär zu Montagepositionen auf dem Kettenblatt (14, 15; 46, 47) ist.

5. Kurbelgarnitur nach Anspruch 3 oder 4, in welcher die antriebseitige Tretkurbel (16, 50) fünf Montagepositionen umfasst.

6. Kurbelgarnitur nach einem der vorhergehenden Ansprüche, in welcher die lösbaren Verbindungsglieder in einem radialen Abstand von wenigstens 8 Zentimeter von der Mittelachse der Kurbelwelle liegen.

7. Kurbelgarnitur nach einem der vorhergehenden Ansprüche, in welcher die lösbaren Verbindungsglieder Bolzen sind.

8. Kurbelgarnitur nach einem der vorhergehenden Ansprüche, in welcher ein Sicherungsring mit doppelt wirkender Freikupplung an dem antriebabseitigen Wellenende zum Verriegeln des antriebseitigen Wellenendes mit der antriebabseitigen Tretkurbel vorgesehen ist.

9. Kurbelgarnitur nach einem der vorhergehenden Ansprüche, in welcher der einstückig ausgebildete Montagekörper durch einen Montageflansch gebildet wird.

10. Kurbelgarnitur nach einem der vorhergehenden Ansprüche, in welcher der einstückig ausgebildete Montagekörper durch ein sich in unterschiedlichen radialen Richtungen erstreckendes mehrarmiges Teil gebildet wird.

11. Fahrrad, versehen mit einer Kurbelgarnitur nach einem der vorhergehenden Ansprüche.

## Revendications

1. Ensemble de pédalier pour bicyclette, comprenant :
- un vilebrequin (40) ayant une extrémité d'arbre côté menant et une extrémité d'arbre côté mené ;
- des roulements (1, 2) pour monter le vilebrequin (40) rotatifs dans une coque de support inférieure d'un cadre de la bicyclette ;
- un pédalier côté menant (16, 50)
- un pédalier côté mené (20, 60) ; et
- au moins une bague de chaîne (14, 15 ; 46, 47)
**caractérisé en ce que**
l'extrémité de l'arbre côté menant est dotée d'un corps de montage s'étendant radialement vers l'extérieur, formé d'un seul tenant (7, 41), corps de montage sur lequel le pédalier côté menant (16, 50) et la bague de chaîne (14, 15 ; 46, 47) sont montés au moyen d'organes de connexion amovibles.

2. Ensemble de pédalier selon la revendication 1, dans lequel le vilebrequin (40), y compris son corps de montage d'un seul tenant (7, 41), est constitué d'un matériau léger, en particulier d'un matériau composite de carbone.

3. Ensemble de pédalier selon l'une des revendications précédentes, dans lequel le pédalier côté menant (10, 50) comprend une pluralité de positions de montage pour les organes de connexion amovibles, afin d'interagir avec eux, ladite pluralité de positions de montage étant complémentaire des positions de montage sur le corps de montage (7, 41) et ladite pluralité de positions de montage étant répartie circonférentiellement autour du vilebrequin (40) à une distance radiale du vilebrequin.

4. Ensemble de pédalier selon la revendication 3, dans lequel la pluralité de positions de montage est en outre complémentaire des positions de montage sur la bague de chaîne (14, 15 ; 46, 47).

5. Ensemble de pédalier selon la revendication 3 ou 4, dans lequel le pédalier côté menant (16, 50) comprend cinq positions de montage.

6. Ensemble de pédalier selon l'une des revendications précédentes, dans lequel les organes de connexion amovibles se situent à une distance radiale de l'axe central du vilebrequin d'au moins 8 centimètres.

7. Ensemble de pédalier selon l'une des revendications précédentes, dans lequel les organes de connexion amovibles sont des boulons.

8. Ensemble de pédalier selon l'une des revendications précédentes, dans lequel une bague de verrouillage cannelée à double action est ménagée sur l'extrémité de l'arbre côté mené, afin de bloquer l'extrémité de l'arbre côté mené avec le pédalier côté mené.

9. Ensemble de pédalier selon l'une des revendications précédentes, dans lequel le corps de montage d'un seul tenant est constitué d'une bride de montage.

10. Ensemble de pédalier selon l'une des revendications précédentes, dans lequel le corps de montage d'un seul tenant est constitué d'une pièce à bras multiples s'étendant dans des directions radiales distinctives.

11. Bicyclette dotée d'un ensemble de pédalier selon l'une des revendications précédentes.
